# EUROPÄISCHE PATENTANMELDUNG

(11) **EP 4 729 767 A1**
(43) Veröffentlichungstag der Anmeldung: **22.04.2026**
(21) Anmeldenummer: 24206843.5
(22) Anmeldetag: 16.10.2024
(51) Int. Cl.: F03D 9/25, F03D 15/10, F03D 80/70

(54) **KOMPONENTENSCHNITTSTELLE ZWISCHEN GETRIEBEEINHEIT UND GENERATOREINHEIT**

(71) Anmelder: Flender GmbH, 46395 Bocholt (DE)
(72) Erfinder: FRIEDRICH, Matthias, 46395 Bocholt (DE); HESSLING, Pascal, 46395 Bocholt (DE); HAMBRECHT, Ralf, 46395 Bocholt (DE); VENNEMANN, Michael, 46395 Bocholt (DE)
(74) Vertreter: Michalski Hüttermann & Partner Patentanwälte mbB

(57) **Zusammenfassung**

Komponentenschnittstelle 10 zwischen einer Getriebeeinheit 110 und einer Generatoreinheit 112 für eine um eine Triebstrangachse A_{D} angetriebene Windkraftanlage 100, mit einer zumindest eine Planetenstufe 12 ausweisenden Getriebeeinheit 110 und einer mit der Getriebeeinheit 110 um die Triebstrangachse A_{D} antriebsverbundene und einen Rotor 30 umfassende Generatoreinheit 112. Eine Abtriebswelle 14 der zumindest einen Planetenstufe 12 zumindest mittelbar mit dem Rotor 30 antrieb verbunden und über eine in einem generatorseitigen Gehäuseelement 16 der Getriebeeinheit 110 aufgenommene Lagereinheit 18 gelagert ist und wobei die Lagereinheit 18 und der Rotor 30 in axialer Richtung der Triebstrangachse A_{D} im gleichen Axialbereich zueinander angeordnet sind. Während des Betriebs wird das von dem Rotor 30 auf die Abtriebswelle 14 wirksame Kippmoment und die durch den Rotor 30 ausgeführten Bewegungen reduziert.

## Beschreibung

Die Erfindung betrifft eine Komponentenschnittstelle zwischen einer Getriebeeinheit und einer Generatoreinheit für eine um eine Triebstrangachse A_{D} angetriebene Windkraftanlage, mit einer zumindest eine Planetenstufe ausweisenden Getriebeeinheit und einer mit der Getriebeeinheit um die Triebstrangachse A_{D} antriebsverbundene und einen Rotor umfassende Generatoreinheit, wobei eine Abtriebswelle der zumindest einen Planetenstufe zumindest mittelbar mit dem Rotor antriebverbunden und über eine in einem generatorseitigen Gehäuseelement der Getriebeeinheit aufgenommene Lagereinheit gelagert ist.

Bei Windkraftanlagen mit mittelschnell drehenden Triebsträngen wird die Generatoreinheit integriert direkt an die Getriebeeinheit angeschlossen. Hierbei wird das Gehäuse der Generatoreinheit mit dem Gehäuse der Getriebeeinheit verbunden oder - alternativ - die Getriebeeinheit und die Generatoreinheit weisen ein gemeinsames, einteiliges Gehäuse auf. Die Komponentenschnittstelle zwischen Getriebeeinheit und Generatoreinheit ist derart ausgeführt, dass der Rotor der Generatoreinheit an die Ausgangswelle bzw. Abtriebswelle der Getriebeeinheit angebunden ist und dabei der Rotor mittelbar über die Abtriebswelle gelagert ist. Die Lagerung der Abtriebswelle der Getriebeeinheit erfolgt in dem Gehäuse der Getriebeeinheit, insbesondere in einem generatorseitigen Gehäuseelement der Getriebeeinheit. Der Anbindungsbereich, beispielsweise als Verschraubung ausgeführt, zwischen Rotor und Abtriebswelle befinden sich im Schwerpunkt des Rotors.

Die Lagerung des Rotors muss eine hohe Steifigkeit aufweisen, um die Kippkräfte resultierend aus der Gewichts- und potenziellen Magnetkräften der Generatoreinheit abzustützen. Zudem muss die Montier- und Wartbarkeit gewährleistet sein, insbesondere der Komponenten der Lagerung der Abtriebswelle und des Dichtsystems. Weiterhin ist bei der Auslegung auf eine Minimierung des im Betrieb entstehenden Körperschalls zu achten.

Die Lagerung der Abtriebswelle wird in der Regel als O-Anordnung ausgeführt, um ein möglichst große Stützweite zu erhalten. Die Lagerung wird in einem aufwendigen Prozess während der Montage vorgespannt, um ein Verkippen des Rotors im späteren Betrieb zu verhindern. Große Lagerabmessungen, hoher Montageaufwand und eine gewisse Fehleranfälligkeit sind die Folge. Weiter wird die Wartung bzw. Austausch auf dem Turm durch diese Art und Größe der Lagerung erschwert. In diesem Zusammenhang ist die EP 2 541 058 A1 als Stand der Technik zu nennen. Es besteht ein ständiges Bedürfnis die Lagerung des Rotors der Getriebeeinheit zu verbessern.

Es ist die Aufgabe der Erfindung Maßnahmen aufzuzeigen, die verbesserte Lagerung des Rotors der Getriebeeinheit ermöglichen.

Die Lösung der Aufgabe erfolgt durch eine Komponentenschnittstelle zwischen einer Getriebeeinheit und einer Generatoreinheit mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Komponentenschnittstelle zwischen einer Getriebeeinheit und einer Generatoreinheit für eine um eine Triebstrangachse A_{D} angetriebene

Windkraftanlage, mit einer zumindest eine Planetenstufe ausweisenden Getriebeeinheit und einer mit der Getriebeeinheit um die Triebstrangachse A_{D} antriebsverbundene und einen Rotor umfassende Generatoreinheit, wobei eine Abtriebswelle der zumindest einen Planetenstufe zumindest mittelbar mit dem Rotor antrieb verbunden und über eine in einem generatorseitigen Gehäuseelement der Getriebeeinheit aufgenommene Lagereinheit gelagert ist und wobei die Lagereinheit und der Rotor in axialer Richtung der Triebstrangachse A_{D} derart zueinander angeordnet sind, dass ein Schwerpunkt des Rotors innerhalb einer axialen Abmessung der Lagereinheit liegt.

Bei der Lagereinheit kann es sich um eine als Lagereinbausatz modular ausgestaltete kombinierte Lagerung handeln. Der Lagereinbausatz kann aufgrund der bevorzugten axialen Position, in der er geringer belastet ist, im Durchmesser kleiner ausgeführt werden und kann somit durch die Wartungsöffnung des Generators demontiert werden.

Indem der Schwerpunkt des Rotors innerhalb der axialen Abmessungen der Lagereinheit angeordnet ist, befinden sich Rotorschwerpunkt und Lagereinheit zumindest annähern in einer axialen Ebene oder in einem gemeinsamen Axialbereich. Hierdurch wird während des Betriebs das von dem Rotor auf die Abtriebswelle wirksame Kippmoment und die durch den Rotor ausgeführten Bewegungen - abgesehen von der Rotation - reduziert. Zudem kann die Steifigkeit des Anbindungsbereichs zwischen Rotor und Abtriebswelle dahingehend abgestimmt werden, dass Rotor und Stator der Generatoreinheit annähernd gleichen Verlagerungen aufgrund der Gewichtskraft und äußeren und inneren Lasten ausgesetzt sind, so dass im Betrieb ein zumindest weitestgehend gleichbleibender Luftspalt zwischen Rotor und Stator eingehalten werden kann. Es wird eine geringere Vibrationsübertragung von dem Rotor auf die Getriebeeinheit aufgrund geringerer Rotorunwucht erreicht.

Die so ausgeführte Komponentenschnittstelle ermöglicht aufgrund geringerer Kräfte auf die Lagereinheit eine kleinere Dimensionierung der Lagereinheit. Es ergeben sich zudem geringere Steifigkeitsanforderungen an die Flanschverbindung zwischen den Gehäusen der Getriebeeinheit und der Generatoreinheit. Insgesamt kann die Lagereinheit mit einer geringeren Tragfähigkeit dimensioniert werden. Die im Betrieb erreichte geringere Lagerbelastung führt zu geringeren Lagertemperaturen. Für die Komponentenschnittstelle ist zudem eine gezielte Einstellbarkeit der Steifigkeit möglich, so dass hierdurch eine Schwingungs- und Tonalitätsoptimierung ermöglicht wird. Nach der Turmmessung ist eine Feinabstimmung in einem großen Frequenzband möglich, ohne tiefe Eingriffe in die Auslegung der Getriebekomponente vornehmen zu müssen.

Die axiale Abmessung der Lagereinheit kann vorteilhafterweise dahingehend konkretisiert werden, dass sie durch die jeweilige Position axialer Stirnseiten der Lagereinheit zueinander gebildet wird. Die Lagereinheit hat folglich eine axiale Breite, beispielsweise durch das axiale Einbaumaß repräsentiert, innerhalb der der Schwerpunkt des Rotors bevorzugt liegt, um die gewünschte Reduzierung des Rotorkippmoments zu erzielen.

In einer bevorzugten Ausgestaltung ist vorgesehen, dass der Schwerpunkt des Rotors in einer Mittelebene der Lagereinheit liegt. Hierdurch wird das auftretende Kippmoment der Rotor bezüglich der Lagereinheit nahezu eliminiert. Besonders weitgehend wird dies erreicht, wenn der Rotor gegenüber einem Anbindungsbereich zwischen Rotor und Abtriebswelle axial in Richtung der Getriebeeinheit abgekröpft ausgeführt ist. Hierfür ist eine Ausführungsform zweckmäßig, bei der sich das generatorseitige Gehäuseelement der Getriebeeinheit in axialer Richtung in den Rotor erstreckt. Das generatorseitige Gehäuseelement erstreckt sich in axialer Richtung in einen lichten Raum des Rotors. Durch die abgekröpfte Ausformung des Rotors ergibt sich ein Volumen innerhalb des Rotorrings und das generatorseitige Gehäuseelement erstreckt sich bis in diesen lichten Raum und wird von dem Rotorring umgeben.

In einer bevorzugten Ausgestaltung ist eine mit der Antriebswelle über ein Kupplungselement drehfest verbundene Hohlwelle vorgesehen und die Antriebswelle ist über die Hohlwelle in dem generatorseitigen Gehäuseelement der Getriebeeinheit gelagert. Hierbei ist die Hohlwelle das eigentliche über die Lagereinheit in dem generatorseitigen Gehäuseelement gelagerte Bauteil. Die Hohlwelle dient als Verbindungsbauteil zwischen Lagereinheit und Abtriebswelle. An der Hohlwelle ist auch der Rotor über den Anbindungsbereich gehalten. Werkstoffseitig kann die Hohlwelle aus einem Guss- oder einem Stahlwerkstoff gefertigt sein.

In einer ersten möglichen Ausgestaltung ist das Kupplungselement innerhalb der axialen Abmessung der Lagereinheit angeordnet. Hierdurch liegt der Schwerpunkt des Rotors, die Lagereinheit, die Hohlwelle und das Kupplungselement im Wesentlichen in einem Axialbereich.

In einer weiteren möglichen Ausgestaltung ist das Kupplungselement bezogen auf die Lagereinheit in Richtung der Getriebeeinheit versetzt angeordnet. Hierbei kann in konkreter Ausgestaltung vorgesehen sein, dass das Kupplungselement benachbart zu einer Laufverzahnung zwischen Planetenrädern und einem Sonnenrad der zumindest einen Planetenstufe angeordnet ist. Für beide der beschriebenen Ausführungen kann vorgesehen sein, dass das Kupplungselement über eine Steckverzahnung, einen Schrumpfsitz oder eine Schraubverbindung ausgeführt ist.

In einer zudem bevorzugten Ausgestaltung umfasst die Lagereinheit zwei in einer X-Anordnung oder einer O-Anordnung angeordnete Wälzlager. Insbesondere die X-Anordnung erlaubt eine schmale Bauform, sowie eine einfache Montage und Demontage.

Die Aufgabe wird auch gelöst durch einen Antriebsstrang für eine Windkraftanlage, umfassend eine Hauptlagereinheit mit einem Lagergehäuse, einer von einem Mehrblattrotor angetriebenen Hauptwelle, einer Getriebeeinheit und einer über die Hauptwelle von der Getriebeeinheit angetriebenen Generatoreinheit, wobei die Komponentenschnittstelle zwischen der Getriebeeinheit und der Generatoreinheit wie zuvor beschrieben ausgebildet ist.

Die Aufgabe wird zudem gelöst durch eine Windkraftanlage, umfassend einen Rotorflansch mit einem Mehrblattrotor, eine Hauptlagereinheit mit einer Hauptwelle, einer Getriebeeinheit und einer Generatoreinheit, wobei ein an einem Maschinenträger gehaltener Antriebsstrang vorgesehen ist, wobei der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine herkömmliche Komponentenschnittstelle zwischen Getriebeeinheit und Generatoreinheit,
Fig. 2: eine erfindungsgemäße Ausführung der Komponentenschnittstelle,
Fig. 3: eine weitere erfindungsgemäße Ausführung der Komponentenschnittstelle und
Fig. 4: eine schematische Darstellung einer Windkraftanlage in einer möglichen Ausführung.

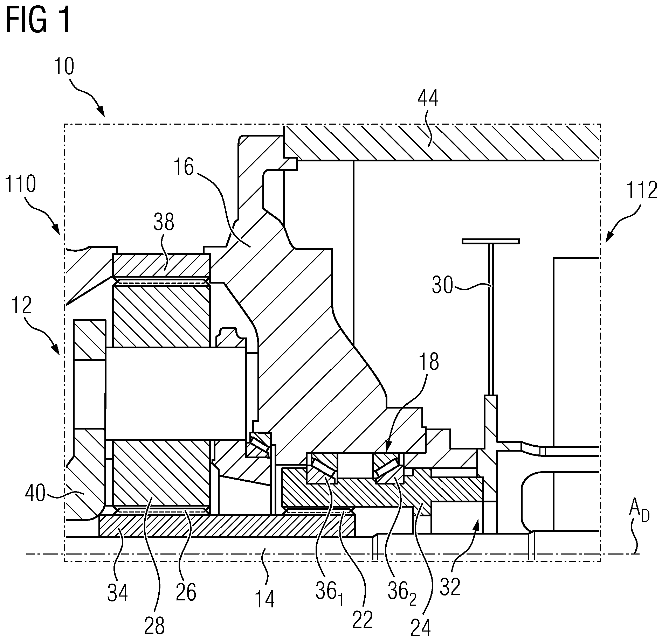

Die Figur 1 zeigt zunächst eine herkömmliche Komponentenschnittstelle 10 zwischen einer Getriebeeinheit 110 und einer Generatoreinheit 112. Hieran wird zunächst der allgemeine strukturelle Aufbau beschrieben, bevor in den weiteren Figuren auf Ausgestaltungen einer erfindungsgemäßen Komponentenschnittstelle eingegangen wird.

Die Figur 1 zeigt ausschnittsweise eine Getriebeeinheit 110 mit einer Planetenstufe 12. Die Getriebeeinheit 110 weist ein Gehäuseelement 16 auf, an dem eine Generatoreinheit 112 beispielsweise über einen entsprechenden Flanschbereich und umfänglich angeordnete Verschraubungen befestigt ist. Die Planetenstufe 12 weist mehrere an einem Planetenträger 40 drehbar gehaltene Planetenräder 28 und ein mit diesem über eine Laufverzahnung 26 in einem Verzahnungseingriff stehendes Hohlrad 38 und eine Sonnenwelle 34 auf. Der Planetenträger 40 ist über Wälzlager um eine Triebstrangachse A_{D} drehbar gegenüber dem Gehäuseelement 16 gelagert. Ein weiteres, aber nicht dargestelltes Lager kann vorgesehen sein. Die Sonnenwelle 34 ist um die Triebstrangachse A_{D} angetrieben. Mit dem Bezugszeichen 24 ist eine Abtriebswelle bezeichnet, die um die Triebstrangachse A_{D} von der Sonnenwelle 34 angetrieben ist. Endseitig ist in dem Gehäuseelement 16 eine Lagereinheit 18 mit zwei in O-Anordnung angeordneten Wälzlagern 36₁, 36₂ vorgesehen. In der Lagereinheit 18 ist eine Hohlwelle 24 um die Triebstrangachse A_{D} drehbar gelagert und die Abtriebswelle 14 ist über ein Kupplungselement 22 in der Hohlwelle 24 drehfest gehalten. Die Hohlwelle 24 bildet generatorseitig einen Anbindungsbereich 32 aus, über den ein Rotor 30 der Generatoreinheit 112 drehfest an der Hohlwelle 24 gehalten ist. Der Rotor 30 ist somit mittelbar über die Hohlwelle 24 gegenüber dem Gehäuseelement 16 der Getriebeeinheit 110 gelagert. Der Rotor 30 ist über den Anbindungsbereich 32 aber auch mittelbar gegenüber der Abtriebswelle 14 gehalten. Mit dem Bezugszeichen 44 ist ein Gehäuseelement der Generatoreinheit 112 bezeichnet.

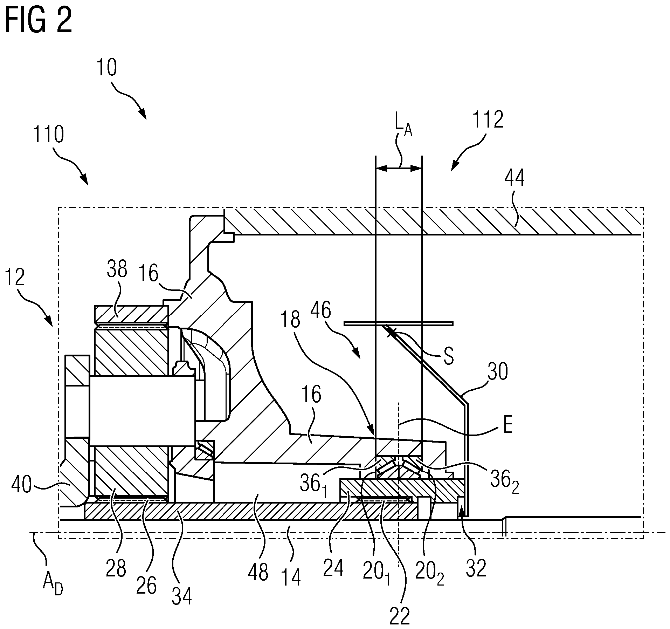

Die Figur 2 zeigt eine mögliche erfindungsgemäße Ausführung der Komponentenschnittstelle 10 und wird bezüglich ihrer Unterschiede im Hinblick auf das in Figur 1 Gezeigte beschrieben. Die Komponentenschnittstelle 10 der Figur 2 zeichnet sich durch eine besonders günstige Positionierung von Lagereinheit 18 und Rotor 30 relativ zueinander aus. Bei der Anordnung von Lagereinheit 18 und Rotor 30 zueinander liegt ein Schwerpunkt S des Rotors 30 innerhalb einer axialen Abmessung L_{A} der Lagereinheit 18. Sowohl der Rotor 30 und dessen Schwerpunkt S als auch die axiale Abmessung L_{A} der Lagereinheit 18 sind in der Figur 2 lediglich schematisch und nichts maßstabsgetreu dargestellt. Die axiale Abmessung L_{A} der Lagereinheit 18 ist vorliegend durch die jeweilige Position der axialer Stirnseiten 20₁, 20₂ der Lagereinheit 18 zueinander bestimmt. Insbesondere kann vorgesehen sein, dass der Schwerpunkt S des Rotors 30 in einer Mittelebene E der Lagereinheit 18 liegt, was vorliegend allerdings nicht dargestellt ist.

Bei der dargestellten Ausführung der Komponentenschnittstelle 10 erstreckt sich das generatorseitige Gehäuseelement 16 der Getriebeeinheit 110 in axialer Richtung in einen lichten Raum 46 des Rotors 30. Hierfür kann es zusätzlich zweckmäßig sein, wenn der Rotor 30 gegenüber dem Anbindungsbereich 32 axial in Richtung der Getriebeeinheit 110 abgekröpft ausgeführt ist, wie dies in der Figur 2 gezeigt ist. Weiterhin ist bei der in Figur 2 gezeigten Ausführung der Komponentenschnittstelle 10 das Kupplungselement 22 innerhalb der axialen Abmessung L_{A} der Lagereinheit 18 angeordnet. Das Kupplungselement 22 ist über eine Steckverzahnung, einen Schrumpfsitz oder eine Schraubverbindung ausgeführt. Vorliegend ist das Kupplungselement 22 als Steckverzahnung mit axialen Sicherungselementen dargestellt. Die zwei Wälzlager 36₁, 36₂ der Lagereinheit 18 sind, wie dargestellt, als X-Anordnung ausgeführt. Indem sich das generatorseitige Gehäuseelement 16 der Getriebeeinheit 110 in axialer Richtung in das Gehäuseelement 44 der Generatoreinheit 112 erstreckt, bildet sich innerhalb des Gehäuseelements 16 ein Freiraum 48. In der Ausführung der Figur 2 bildet sich der Freiraum 48 im Wesentlichen radial zwischen der Gehäusewandung und der Sonnenwelle 14. Der Freiraum 48 kann dazu benutzt werden, die Torsionssteifigkeit des Triebstrangs gezielt schwingungsoptimiert zu beeinflussen. Insbesondere kann die Torsions- und Biegesteifigkeit der Anbindung Sonnenwelle 14 an Hohlwelle 24 in ihrer Variabilität beeinflusst werden.

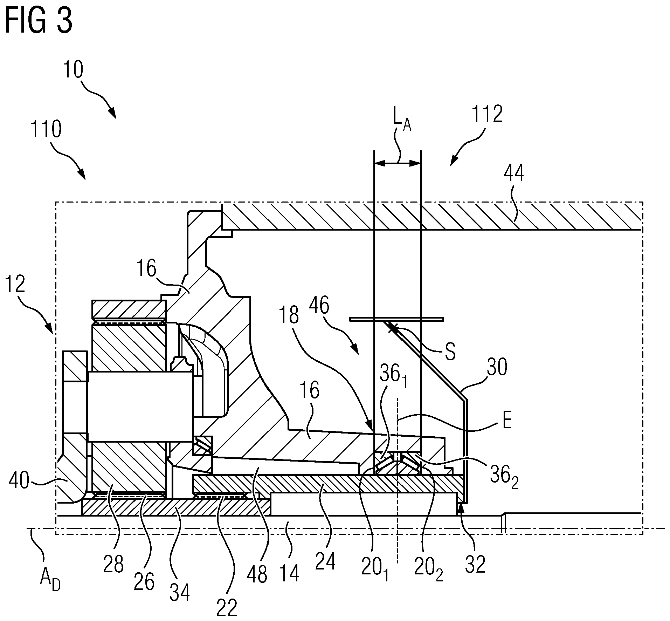

Die Figur 3 zeigt eine weitere erfindungsgemäße Ausführung der Komponentenschnittstelle 10 und wird bezüglich ihrer Unterschiede im Hinblick auf das in den Figur 1 und 2 Gezeigte beschrieben. Das Kupplungselement 22 ist bezogen auf die Lagereinheit 18 in Richtung der Getriebeeinheit 110 versetzt angeordnet. In der Figur 3 ist das Kupplungselement 22 benachbart zu der Laufverzahnung 26 zwischen Planetenrädern 28 und einem Sonnenrad 34 der zumindest einen Planetenstufe 14 angeordnet. Auch hier ist durch die Formgebung des generatorseitigen Gehäuseelements 16 ein Freiraum 48 radial zwischen der Gehäusewandung und der Abtriebswelle 24 geschaffen, der für die im Zusammenhang mit der Figur 2 genannten Zwecke dienen kann.

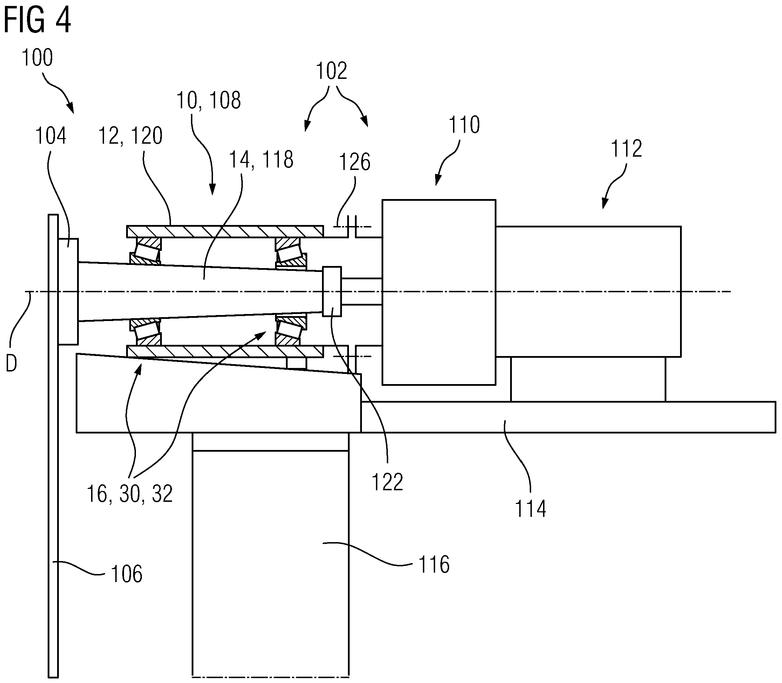

Die Figur 4 zeigt exemplarisch in schematischer und nicht maßstabsgetreuer Darstellung eine Windkraftanlage 100. Wesentliches Element der Windkraftanlage 100 ist ein Antriebstrang 102, der vorliegend strukturell einen Rotorflansch 104 mit einem Mehrblattrotor 106, eine Hauptlagereinheit 108, eine Getriebeeinheit 110 und eine Generatoreinheit 112 umfasst. Über einen Maschinenträger 114 werden zumindest die Hauptlagereinheit 108 und die Generatoreinheit 112 über einen Turm 116 gegenüber dem, nicht dargestellten, Boden abgestützt.

Die Hauptlagereinheit 108 umfasst eine Hauptwelle 118, die über eine Wälzlageranordnung 16 gegenüber einem Lagergehäuse 120 der Hauptlagereinheit 108 drehbar um eine Drehachse D gelagert ist. An einem Ende der Hauptwelle 118 ist der Rotorflansch 104 und an diesem der Mehrblattrotor 106 gehalten. Das andere Ende der Hauptwelle 118 ist über eine Kupplung 122 antriebsmäßig mit der Getriebeeinheit 110 verbunden, um ein von dem Mehrblattrotor 106 aufgebrachtes Antriebsmoment in die Getriebeeinheit 110 einzuleiten. Die Getriebeeinheit 110 kann als Planetengetriebe mit einer oder mehreren Planetenstufen ausgeführt sein. Die Getriebeeinheit 110 ist antriebsmäßig mit der Generatoreinheit 112 verbunden. Über einen Flansch 126 ist das Lagergehäuse 120 mit der Getriebeeinheit 110 verbunden. Ein Reaktionsmoment der Getriebeeinheit 110 ist über den Flansch 126 gegenüber dem Rotorlagergehäuse und darüber zum Maschinenträger 114 abgestützt.

### Bezugszeichenliste

- 10: Komponentenschnittstelle
- 12: Planetenstufe
- 14: Abtriebswelle
- 16: Gehäuseelement
- 18: Lagereinheit
- 20: Stirnseite
- 22: Kupplungselement
- 24: Hohlwelle
- 26: Laufverzahnung
- 28: Planetenrad
- 30: Rotor
- 32: Anbindungsbereich
- 34: Sonnenrad
- 36: Wälzlager
- 38: Hohlrad
- 40: Planetenträger
- 44: Gehäuseelement
- 46: lichter Raum
- 48: Freiraum
- 100: Windkraftanlage
- 102: Antriebstrang
- 104: Rotorflansch
- 106: Mehrblattrotor
- 108: Hauptlagereinheit
- 110: Getriebeeinheit
- 112: Generatoreinheit
- 114: Maschinenträger

- 116: Turm
- 118: Hauptwelle
- 120: Lagergehäuse
- 122: Kupplung
- 126: Flansch
- L_{A}: Abmessung
- S: Schwerpunkt
- E: Mittelebene

## Patentansprüche

1. Komponentenschnittstelle (10) zwischen einer Getriebeeinheit (110) und einer Generatoreinheit (112) für eine um eine Triebstrangachse (A_{D}) angetriebene Windkraftanlage (100), mit
einer zumindest eine Planetenstufe (12) ausweisenden Getriebeeinheit (110) und einer mit der Getriebeeinheit (110) um die Triebstrangachse (A_{D}) antriebsverbundene und einen Rotor (30) umfassende Generatoreinheit (112),
wobei eine Abtriebswelle (14) der zumindest einen Planetenstufe (12) zumindest mittelbar mit dem Rotor (30) antriebverbunden und über eine in einem generatorseitigen Gehäuseelement (16) der Getriebeeinheit (110) aufgenommene Lagereinheit (18) gelagert ist und
wobei die Lagereinheit (18) und der Rotor (30) in axialer Richtung der Triebstrangachse (A_{D}) derart zueinander angeordnet sind, dass ein Schwerpunkt (S) des Rotors (30) innerhalb einer axialen Abmessung (L_{A}) der Lagereinheit (18) liegt.

2. Komponentenschnittstelle (10) nach Anspruch 1, **dadurch gekennzeichnet, dass** die axiale Abmessung (L_{A}) der Lagereinheit (18) durch die jeweilige Position axialer Stirnseiten (20₁, 20₂) der Lagereinheit (18) zueinander gebildet wird.

3. Komponentenschnittstelle (10) nach Anspruch 1 oder 2, **dadurch gekennzeichnet, dass** der Schwerpunkt (S) des Rotors (30) in einer Mittelebene (E) der Lagereinheit (18) liegt.

4. Komponentenschnittstelle (10) nach einem der Ansprüche 1 bis 3, **dadurch gekennzeichnet, dass** der Rotor (30) gegenüber einem mittelbaren Anbindungsbereich (32) zwischen Rotor (30) und Abtriebswelle (14) axial in Richtung der Getriebeeinheit (110) abgekröpft ausgeführt ist.

5. Komponentenschnittstelle (10) nach einem der Ansprüche 1 bis 4, **dadurch gekennzeichnet, dass** sich das generatorseitige Gehäuseelement (16) der Getriebeeinheit (110) in axialer Richtung in den Rotor (30) erstreckt.

6. Komponentenschnittstelle (10) nach einem der Ansprüche 1 bis 5, **dadurch gekennzeichnet, dass** eine mit der Abtriebswelle (14) über ein Kupplungselement (22) drehfest verbundene Hohlwelle (24) vorgesehen ist und die Abtriebswelle (14) über die Hohlwelle (24) in dem generatorseitigen Gehäuseelement (16) der Getriebeeinheit (110) gelagert ist.

7. Komponentenschnittstelle (10) nach Anspruch 6, **dadurch gekennzeichnet, dass** die Hohlwelle (24) aus einem Gusswerkstoff oder einem Stahlwerkstoff gefertigt ist.

8. Komponentenschnittstelle (10) nach Anspruch 5, 6 oder 7, **dadurch gekennzeichnet, dass** das Kupplungselement (22) innerhalb der axialen Abmessung (L_{A}) der Lagereinheit (18) liegt.

9. Komponentenschnittstelle (10) nach Anspruch 5, 6 oder 7, **dadurch gekennzeichnet, dass** das Kupplungselement (22) bezogen auf die Lagereinheit (18) in Richtung der Getriebeeinheit (110) versetzt angeordnet ist.

10. Komponentenschnittstelle (10) nach Anspruch 9, **dadurch gekennzeichnet, dass** das Kupplungselement (22) benachbart zu einer Laufverzahnung (26) zwischen Planetenrädern (28) und einem Sonnenrad (34) der zumindest einen Planetenstufe (14) angeordnet ist.

11. Komponentenschnittstelle (10) nach einem der Ansprüche 6 bis 10, **dadurch gekennzeichnet, dass** das Kupplungselement (22) über eine Steckverzahnung, einen Schrumpfsitz oder eine Schraubverbindung ausgeführt ist.

12. Komponentenschnittstelle (10) nach einem der Ansprüche 1 bis 11, **dadurch gekennzeichnet, dass** die Lagereinheit (18) zwei in einer X-Anordnung oder einer O-Anordnung angeordnete Wälzlager (38₁, 38₂) umfasst.

13. Antriebsstrang (102) für eine Windkraftanlage (100), umfassend eine Hauptlagereinheit (108) mit einem Lagergehäuse (120), einer von einem Mehrblattrotor (106) angetriebenen Hauptwelle (118), einer Getriebeeinheit (110) und einer über die Hauptwelle (118) von der Getriebeeinheit (110) angetriebenen Generatoreinheit (112), **dadurch gekennzeichnet, dass** die Komponentenschnittstelle zwischen der Getriebeeinheit (110) und der Generatoreinheit (112) nach einem der vorangegangenen Ansprüche ausgebildet ist.

14. Windkraftanlage (100), umfassend einen Rotorflansch (104) mit einem Mehrblattrotor (106), eine Hauptlagereinheit (108) mit einer Hauptwelle (118), einer Getriebeeinheit (110) und einer Generatoreinheit (112), wobei ein an einem Maschinenträger (114) gehaltener Antriebsstrang (102) vorgesehen ist, **dadurch gekennzeichnet, dass** der Antriebsstrang (102) nach Anspruch 13 ausgebildet ist.
